Europäisches Patentamt

(19) European Patent Office

Office européen des brevets

(11) Veröffentlichungsnummer: **0 017 968**
**B1**

(12) **EUROPÄISCHE PATENTSCHRIFT**

(45) Veröffentlichungstag der Patentschrift:
12.01.83

(51) Int. Cl.³: **B 29 B 1/06**, B 05 B 7/32,
B 01 F 15/04

(21) Anmeldenummer: 80102031.4

(22) Anmeldetag: 16.04.80

(54) **Vorrichtung zum Dosieren und Mischen von flüssigen Zweikomponenten-Kunststoffen.**

(30) Priorität: 20.04.79 CH 3718/79

(43) Veröffentlichungstag der Anmeldung:
29.10.80 Patentblatt 80/22

(45) Bekanntmachung des Hinweises auf die Patenterteilung:
12.01.83 Patentblatt 83/2

(84) Benannte Vertragsstaaten:
AT BE DE FR GB IT LU NL SE

(56) Entgegenhaltungen:
CH-A-440 910
DE-A-2 526 215
DE-A-2 708 062
DE-B-1 912 734

(73) Patentinhaber: GEORG FISCHER
AKTIENGESELLSCHAFT, Mühlentalstrasse 105,
CH-8201 Schaffhausen (CH)

(72) Erfinder: Steiner, Wilhelm, Allemannenstrasse 15,
D-7700 Singen (DE)
Erfinder: Pauling, Horst, Kasernenstrasse 7,
D-7760 Radolfzell (DE)
Erfinder: Horber, Helmut, Rickelshauserstrasse 12,
D-7760 Radolfzell (DE)

## Vorrichtung zum Dosieren und Mischen von flüssigen Zweikomponentenkunststoffen

Die Erfindung betrifft eine Vorrichtung zum Dosieren und Mischen von flüssigen Zweikomponentenkunststoffen mit je einer Dosierpumpe für jede Komponente, mit einem durch Leitungen mit den Dosierpumpen verbundenen Mischkopf, mit einer Spüleinrichtung und mit Behältern für die Komponenten und die Spülflüssigkeit.

Es sind Vorrichtungen der eingangs genannten Art bekannt (z.B. DE-B Nr. 1912734) mittels welchen jeweils nur eine Art eines Zweikomponentenkunststoffes, z.B. eines Schaumstoffes, hergestellt werden kann. Werden jedoch kurz hintereinander zwei verschiedene, aus zwei flüssigen Komponenten bestehende Kunststoffe benötigt, so müssen entweder zwei derartige Vorrichtungen verwendet werden, oder die Vorrichtung muss umgerüstet werden, d.h. mindestens eine der Komponenten muss gewechselt werden, was eine Reinigung der entsprechenden Dosierpumpe und deren Leitungen mit entsprechend grossem Aufwand an Zeit und Reinigungsmittel erfordert.

Insbesonders bei der Herstellung von Giessereimodellen aus Kunststoff werden oft kurzfristig nacheinander zwei verschiedene Arten von Zweikomponentenkunststoffen benötigt, wobei die Modelle nur in geringen Stückzahlen hergestellt werden, so dass eine genügende Auslastung von zwei verschiedenen Vorrichtungen zum Dosieren und Mischen der Zweikomponentenkunststoffe nicht gegeben ist. Hierbei wird zuerst für den Trägerwerkstoff des Modelles, z.B. ein PUR-Schaumstoff, und anschliessend für die Modelloberfläche ein Oberflächenschichtharz, wie z.B. ein Polyurethanzweikomponentensystem, benötigt.

Es ist somit Aufgabe der vorliegenden Erfindung, eine einfache Vorrichtung der eingangs genannten Art zu schaffen, mittels welcher kurz nacheinander mindestens zwei verschiedene flüssige Zweikomponentenkunststoffe durch dosiertes Vermischen der einzelnen Komponenten herstellbar sind, und welche an verschiedenen Arbeitsplätzen rasch einsetzbar und einfach bedienbar ist.

Zur Lösung der Aufgabe sind die im kennzeichnenden Teil des Anspruches 1 angegebenen Gestaltungsmerkmale für die Erfindung vorgesehen.

Bevorzugte Ausführungsformen ergeben sich nach den weiteren Ansprüchen.

Die erfindungsgemässe Vorrichtung ermöglicht das Mischen mindestens zwei verschiedener, aus zwei Komponenten bestehender flüssiger Kunststoffe kurz nacheinander, wobei der Antrieb mittels nur eines regelbaren Motors, vorzugsweise eines Getriebemotors, und das Umschalten des Antriebes auf die verschiedenen Dosierpumpen mit einfachen Kupplungen eine einfache, wenig investitionsaufwendige und robuste Bauweise ergibt.

Durch die Anordnung des Mischkopfes an einem heb- und senkbaren sowie schwenkbaren Ausleger, welcher an dem fahrbaren Gehäuse befestigt ist, wird ein rascher Einsatz der Vorrichtung an den wechselnden Arbeitsstellen und eine gute Bedienbarkeit gewährleistet.

Die erfindungsgemässe Vorrichtung ist besonders zum abwechslungsweisen Mischen eines Oberflächenschichtharzes, wie z.B. eines Polyurethanzweikomponentensystems und eines PUR-Schaumstoffes, geeignet, wobei diese Kunststoffe, vorzugsweise bei der Herstellung von abriebfesten Modellen und Werkzeugen, Verwendung finden.

Die Erfindung ist nachstehend anhand einer in den Zeichnungen dargestellten Ausführungsform beschrieben. Hierbei zeigen:

Fig. 1 eine Vorderansicht der erfindungsgemässen Vorrichtung,

Fig. 2 eine Seitenansicht von Fig. 1, und

Fig. 3 eine vereinfachte Darstellung des Antriebes der Dosierpumpen.

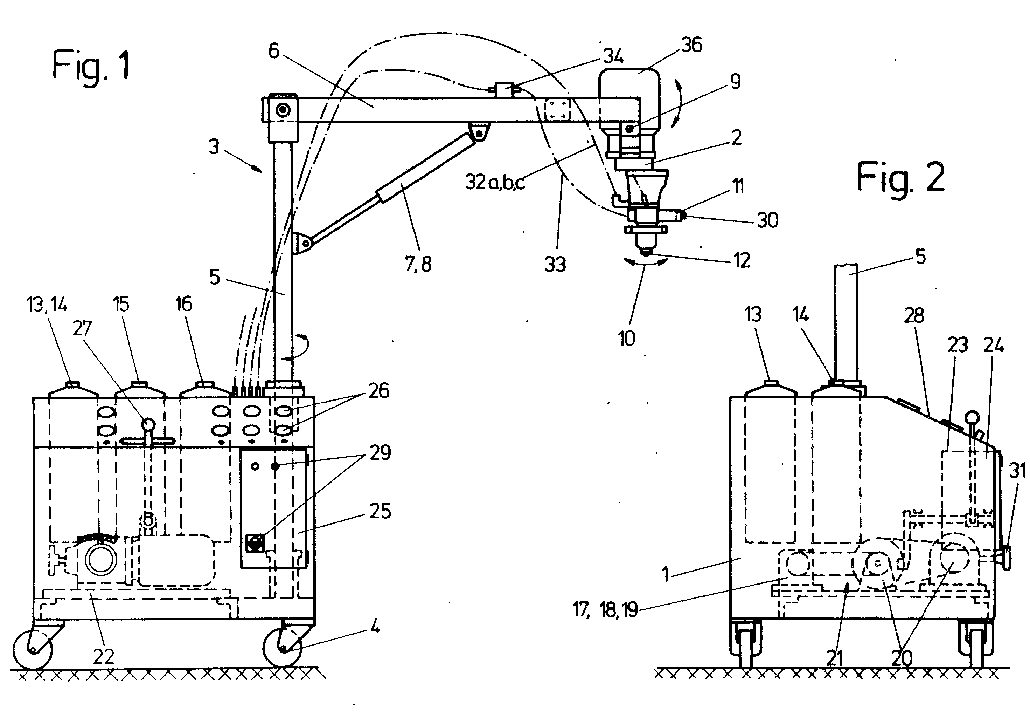

Die in den Fig. 1 und 2 dargestellte Vorrichtung zum Dosieren und Mischen von flüssigen Zweikomponentenkunststoffen weist ein mittels Rollen 4 fahrbares Gehäuse 1, einen Ausleger 3 und einen Mischkopf 2 auf. Der Mischkopf 2 ist mit einem Motor 36 zum Antrieb einer weiter nicht dargestellten Mischwelle versehen. Der Ausleger 3 besteht aus einer im Gehäuse 1 drehbar befestigten Säule 5, einem an der Säule 5 nach oben und unten schwenkbar befestigten Arm 6 und einem zwischen Säule 5 und Arm 6 angeordneten und als Gewichtsausgleichseinrichtung 7 dienenden Gaszylinder 8. Der Mischkopf 2 ist am Arm 6 mittels Zapfen 9 entsprechend dem Pfeil 10 schwenkbar befestigt und weist einen Handgriff 11 auf, mittels welchem eine Ausflussdüse 12 in die gewünschte Arbeitsstellung bringbar ist.

Im Gehäuse 1 sind vier Behälter 13, 14, 15, 16 von oben leicht auswechselbar eingesetzt, wobei je ein Behälter 13, 14 für je eine der Komponenten A1 bzw. A2 zweier verschiedener flüssiger Kunststoffgemische, der Behälter 15 für die zweite Komponente B beider Kunststoffgemische und der Behälter 16 für eine Reinigungsflüssigkeit, z.B. Methylenchlorid, bestimmt ist.

Im Gehäuse 1 sind drei Dosierpumpen 17, 18, 19 für die verschiedenen Kunststoffkomponenten sowie deren Antrieb 20 untergebracht, wobei diese vorteilhafterweise zu einer Montageeinheit 21 auf einer leicht einsetzbaren Grundplatte 22 angeordnet sind. Im Gehäuse 1 ist ein Kasten 23 untergebracht, in welchem eine elektrische Steuerung 24 für die gesamte Vorrichtung angeordnet ist. Die Steuerung 24 ist durch eine an der Frontseite angeordnete Türe 25 gut zugänglich.

Anzeigegeräte 26 und ein Schalthebel 27 sind an einem schräg angeordneten Bedienungspult 28, und Schalter 29 sind an der Türe 25 angeordnet. Ein weiterer Schalter 30 ist am Handgriff 11 des Mischkopfes 2 befestigt und mit der Steuerung 24 wirkverbunden. Ein an der Frontseite des Gehäuses 1 angeordnetes Handrad 31 dient zur Drehzahleinstellung des Antriebes 20.

Wie aus der Fig. 1 weiterhin ersichtlich ist, sind zwischen dem Mischkopf 2 und dem Gehäuse 1 Leitungen 32a, 32b, 32c für die drei verschiedenen Kunststoffkomponenten A1, A2 und B sowie eine Leitung 33 mit einem am Arm 6 befestigten Elektromagnetventil 34 für die Reinigungsflüssigkeit angeordnet.

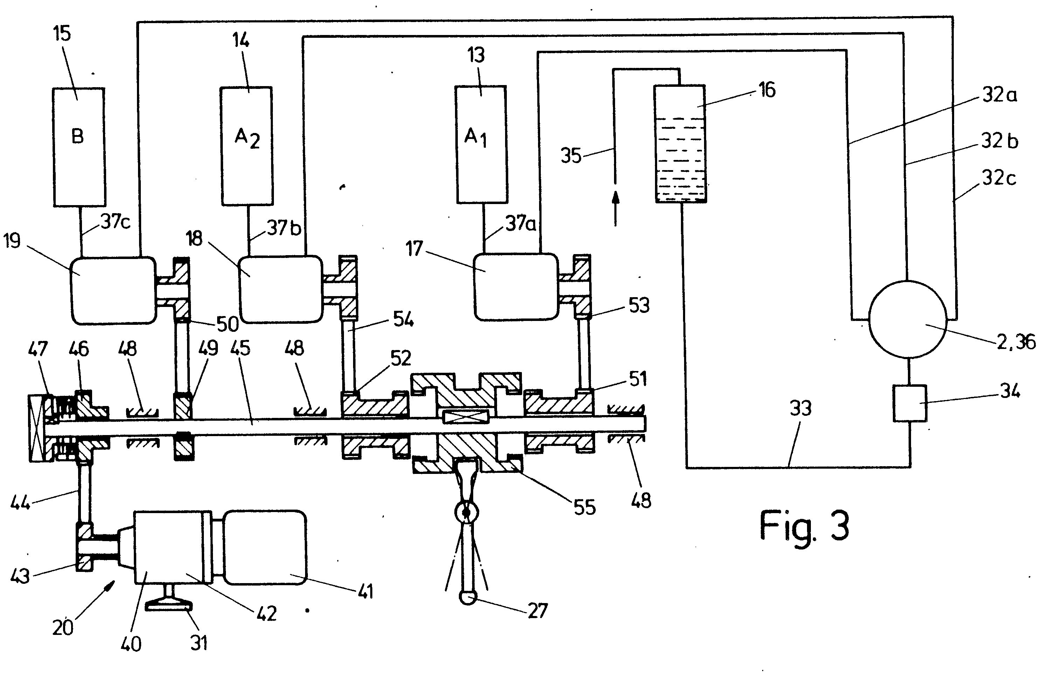

In Fig. 3 ist das Antriebsaggregat 20 mit den Dosierpumpen 17, 18, 19 sowie deren Verbindung mit den Behältern 13, 14, 15 und dem Mischkopf 2 in vereinfachter Form näher dargestellt.

Das Antriebsaggregat 20 weist einen Getriebemotor 40 auf, welcher aus einem Elektromotor 41 und einem in der Drehzahl stufenlos einstellbaren mechanischen Getrieb 42, wie z.B. ein Riemenvariator, besteht. Es kann auch direkt ein in der Drehzahl regelbarer Elektromotor oder Hydraulikmotor dafür eingesetzt werden. Die Ausgangsdrehzahl ist mittels des bereits in Fig. 1 beschriebenen Handrades 31 einstellbar.

Ein am Getriebe 42 angeordnetes Kettenrad 43 treibt mittels einer Kette 44 ein auf einer Vorgelegewelle 45 gelagertes Kettenrad 46 an, welches mittels einer Kupplung 47 — vorzugsweise eine elektromagnetische Lamellenkupplung — mit der Vorgelegewelle 45 drehfest verbindbar ist. Bei regelbaren Antrieben, deren Drehzahl auch im Stillstand einstellbar ist, kann auf diese Kupplung 47 verzichtet werden. Die Vorgelegewelle 45 ist in Lagern 48 auf der Grundplatte 22 gelagert (s. auch Fig. 1 und 2). Ein drehfest mit der Vorgelegewelle 45 verbundenes Kettenrad 49 treibt mittels eines Kettentriebes 50 die Dosierpumpe 19 für die Kunststoffkomponente B an. Zwei weitere, auf der Vorgelegewelle 45 drehbar gelagerte Kettenräder 51 und 52 sind mittels Kettentriebe 53 und 54 mit den Dosierpumpen 17 und 18 für die Kunststoffkomponenten A1 und A2 wirkverbunden. Die beiden Kettenräder 51 und 52 sind durch eine Kupplung 55, vorzugsweise eine Doppelzahnkupplung, wahlweise mit der Vorgelegewelle 45 drehfest verbindbar, was durch axiales Verschieben der Zahnkupplung 55 auf der Vorgelegewelle 45 mittels des bereits in dem Fig. 1 und 2 beschriebenen Schalthebels 27 erfolgt. Hierdurch sind jeweils wahlweise die Dosierpumpen 17 oder 18 mittels des Antriebes 20 antreibbar. Als Kupplung 55 können auch mechanisch, elektrisch oder hydraulisch schaltbare Lamellenkupplungen verwendet werden. Ausserdem können statt der Kettentriebe auch Riementriebe oder Zahnradgetriebe verwendet werden. Die Dosierpumpen 17, 18, 19 sind vorzugsweise als kostengünstige Zahnradpumpen ausgebildet.

Die Dosierpumpen 17, 18, 19 sind einerseits mittels Leitungen 37a, 37b, 37c mit den Behältern 13, 14, 15 und anderseits mittels der Leitungen 32a, 32b, 32c mit dem Mischkopf 2 verbunden.

Die Reinigungsflüssigkeit wird mittels eines am Behälter 16 konstant wirkenden Druckluftpolsters, welches durch die Druckluftleitung 35 aufgebaut wird, durch die Leitung 33 dem Mischkopf 2 zugeführt. Der Reinigungsvorgang des Mischkopfes 2 erfolgt automatisch nach jedem Arbeitsprozess und wird mittels eines in der Steuerung 24 angeordneten Zeitrelais durch das Elektromagnetventil 34 gesteuert.

Die Arbeitsweise der hier beschriebenen Einrichtung ist wie folgt:

Soll zuerst, z.B. für die Herstellung des Trägerteils eines Modelles, PUR-Schaumstoff verarbeitet werden, so wird mittels des Schalthebels 27 die entsprechende Dosierpumpe, z.B. 17, mit dem Antrieb 20 verbunden und anschliessend der Elektromotor 41 und der Motor des Mischkopfes 36 eingeschaltet. Bei laufendem Getriebe 42 aber stillstehender Vorgelegewelle 45 kann die gewünschte Ausflussmenge pro Zeiteinheit des Kunststoffes durch Veränderung der Drehzahl mittels des Handrades 31 eingestellt werden.

Dann wird mittels des Handgriffes 11 der beweglich gelagerte Mischkopf 2 in die gewünschte Arbeitsstellung gebracht und durch Betätigen des Schalters 30 am Handgriff 11 die Kupplung 47 eingeschaltet, wodurch die beiden Dosierpumpen 17 und 19 die beiden Komponenten A1 und B durch die Leitungen 32a und 32c zum Mischkopf 2 befördern, wo diese, dosiert gemischt, aus der Ausflussdüse 12 austreten. Ist die gewünschte Menge des flüssigen Kunststoffes ausgeflossen, so wird durch Ausschalten des Schalters 30 die Vorgelegewelle 45 wieder stillgesetzt, wonach automatisch der bereits beschriebene Spülvorgang des Mischkopfes 2 abläuft. Soll anschliessend die Modelloberfläche mittels eines Schichtharzes hergestellt werden, so wird mittels des Schalthebels 27 die Dosierpumpe 18 mit dem Antrieb 20 wirkverbunden. Der anschliessende Arbeitsvorgang läuft wie bereits beschrieben ab, wobei dann im Mischkopf 2 die Komponente A2 mit der Komponente B gemischt werden, um das gewünschte Schichtharz zu erhalten. Ist an der Vorgelegewelle 45 keine elektromagnetische Kupplung 47 angeordnet, so wird der Getriebemotor 40 jeweils direkt mit dem Schalter 30 ein- und ausgeschaltet.

Der jeweils automatisch ablaufende Reinigungsvorgang und die dafür günstige Ausbildung des Mischkopfes gewährleisten immer ein einwandfreies Gemisch aus den beiden gewünschten Kunststoffkomponenten, wobei dies auch durch Anordnung je einer Leitung 32a, 32b, 32c für jede Komponente bis zum Mischkopf 2 gewährleistet wird.

Sollen mehr als zwei verschiedene Kunststoffarten verarbeitet werden, so kann die erfindungsgemässe Vorrichtung mit der entsprechenden Anzahl Dosierpumpen und Behältern versehen werden, wobei dann jeweils durch Umschaltung des Antriebes nur die beiden Dosierpumpen für die Komponenten A und B des gewünschten Kunststoffes antreibbar sind.

## Patentansprüche

1. Vorrichtung zum Dosieren und Mischen von flüssigen Zweikomponentenkunststoffen mit je einer Dosierpumpe (17, 18, 19) für jede Komponente (A1, A2, B) mit einem durch Leitungen (32a, 32b, 32c) mit den Dosierpumpen (17, 18, 19) verbundenen Mischkopf (2), mit einer Spüleinrichtung (16, 33, 34) und mit Behältern (13, 14, 15, 16) für die Komponenten und die Spülflüssigkeit, dadurch gekennzeichnet, dass in einem transportablen Gehäuse (1) mindestens ein Behälter (15) für eine erste Kunststoffkomponente (B) und mindestens zwei Behälter (13, 14) für unterschiedliche zweite Kuntstoffkomponenten (A1, A2) sowie die zugehörigen Dosierpumpen (17, 18, 19) und ein gemeinsamer regelbarer Antriebsmotor (20) für die Dosierpumpen angeordnet sind, dass eine Umschalteinrichtung (55) zum wahlweisen Anschluss des Antriebes (20) an jeweils eine von mindestens zwei Dosierpumpen (17, 18) für den gewünschten, zusammen mit der ersten Kunststoffkomponente (B), Zweikomponentenkunststoff ergebende Kunststoffkomponenten vorgesehen ist, und dass der Mischkopf (2) beweglich mit dem Gehäuse (1) verbunden ist.

2. Vorrichtung nach Anspruch 1, dadurch gekennzeichnet, dass die Umschalteinrichtung mindestens eine mechanisch, elektrisch oder hydraulisch schaltbare Kupplung (55) aufweist.

3. Vorrichtung nach Anspruch 2, dadurch gekennzeichnet, dass die Kupplung (55) aus einer auf einer Vorgelegewelle (45) angeordneten und mittels eines Schalthebels (27) verschiebbaren Doppelzahnkupplung (55) besteht.

4. Vorrichtung nach einem der Ansprüche 1 bis 3, dadurch gekennzeichnet, dass die Dosierpumpen (17, 18, 19) als mit einer einstellbaren Drehzahl angetriebene Zahnradpumpen ausgebildet sind.

5. Vorrichtung nach den Ansprüchen 3 und 4, dadurch gekennzeichnet, dass die Vorgelegewelle (45) durch einen in der Drehzahl stufenlos einstellbaren Getriebemotor (40) antreibbar ist, und dass jede der Dosierpumpen (17, 18, 19) für die Komponenten A1, A2 und B, von dieser Vorgelegewelle (45), vorzugsweise mittels eines Kettentriebes (50, 53, 54), antreibbar ist.

6. Vorrichtung nach Anspruch 5, dadurch gekennzeichnet, dass zwischen dem Getriebemotor (40) und der Vorgelegewelle (45) eine elektromagnetische Kupplung (47) angeordnet ist.

7. Vorrichtung nach einem der Ansprüche 1 bis 6, dadurch gekennzeichnet, dass die Dosierpumpen (17, 18, 19) und deren Antrieb (20) als Montageeinheit (21) auf einer gemeinsamen Grundplatte (22) angeordnet sind.

8. Vorrichtung nach einem der Ansprüche 1 bis 7, dadurch gekennzeichnet, dass der Mischkopf (2) an einem an einer drehbaren Säule (5) heb- und senkbar befestigten Arm (6) angeordnet ist, welcher mit einer Gewichtsausgleichseinrichtung (7) versehen ist.

9. Vorrichtung nach Anspruch 8, dadurch gekennzeichnet, dass an dem Mischkopf (2) ein Handgriff (11) und ein Schalter (30) für das Einschalten des Antriebes (20) der Dosierpumpen (17, 18, 19) angeordnet ist.

10. Vorrichtung nach einem der beiden Ansprüche 8 oder 9, dadurch gekennzeichnet, dass die Säule (5) an einem fahrbaren Gehäuse (1) befestigt ist.

11. Verwendung der Vorrichtung gemäss einem der Ansprüche 1 bis 10 zum abwechslungsweisen Mischen eines Oberflächenschichtharzes, wie z.B. eines Polyurethanzweikomponentensystems und eines PUR-Schaumstoffes.

12. Verwendung der Vorrichtung gemäss Anspruch 11 zur Herstellung von abriebfesten Modellen und Werkzeugen.

## Revendications

1. Installation de dosage et de mélange de matières plastiques à base de deux composants liquides, comprenant une pompe doseuse (17, 18, 19) pour chaque composant (A1, A2, B), une tête de mélange (2) reliée aux pompes doseuses (17, 18, 19) par des conduites (32a, 32b, 32c), un dispositif de rinçage (16, 33, 34) et des réservoirs (13, 14, 15, 16) pour les composants et le liquide de rinçage, caractérisée en ce que, dans un bâti transportable (1), sont agencés au moins un réservoir (15) pour un premier composant de matière plastique (B) et au moins deux réservoirs (13, 14) pour des deuxièmes composants de matières plastiques différents (A1, A2), ainsi que les pompes doseuses correspondantes (17, 18, 19) et un moteur d'entraînement commun réglable (20) pour les pompes doseuses, en ce qu'il est prévu un dispositif de commutation (55) permettant de raccorder sélectivement l'entraînement (20) chaque fois à l'une d'au moins deux pompes doseuses (17, 18), prévues pour les composants de matières plastiques donnant la matière plastique à deux composants désirée en combinaison avec le premier composant de matière plastique (B), et en ce que la tête de mélange (2) est reliée au bâti (1) avec possibilité de déplacement.

2. Installation suivant la revendication 1, caractérisée en ce que le dispositif de commutation comprend au moins un accouplement (55) pouvant être commandé mécaniquement, électriquement ou hydrauliquement.

3. Installation suivant la revendication 2, caractérisée en ce que l'accouplement (55) est composé d'un accouplement double à dents (55), agencé sur un arbre de renvoi (45) et pouvant être déplacé en translation au moyen d'un levier de changement (27).

4. Installation suivant l'une des revendications 1 à 3, caractérisée en ce que les pompes doseuses (17, 18, 19) sont constituées par des pompes à engrenage entraînées à un nombre de tours réglable.

5. Installation suivant les revendications 3 et 4, caractérisée en ce que l'arbre de renvoi (45) peut être entraîné par un moteur à mécanisme (40) réglable en nombre de tours par variation continue, et en ce que chacune des pompes doseuses (17, 18, 19) prévues pour les composants (A1, A2 et B) peut être entraînée par cet arbre de renvoi (45) de préférence au moyen d'une transmission à chaîne (50, 53, 54).

6. Installation suivant la revendication 5, caractérisée en ce qu'un embrayage électromagnétique (47) est interposé entre le moteur à mécanisme (40) et l'arbre de renvoi (45).

7. Installation suivant l'une des revendications 1 à 6, caractérisée en ce que les pompes doseuses (17, 18, 19) et leur entraînement (20) sont agencés sur une plaque de base commune (22) pour constituer une unité de montage (21).

8. Installation suivant l'une des revendications 1 à 7, caractérisée en ce que la tête de mélange (2) est agencée sur un bras (6) fixé à une colonne tournante (5) de manière à pouvoir monter et descendre, lequel est muni d'un dispositif (7) de compensation du poids.

9. Installation suivant la revendication 8, caractérisée en ce que, sur la tête de mélange (2), sont agencés une poignée (11) et un commutateur (30) pour la mise en marche de l'entraînement (20) des pompes doseuses (17, 18, 19).

10. Installation suivant l'une des revendications 8 ou 9, caractérisée en ce que la colonne (5) est fixée sur un bâti mobile (1).

11. Emploi de l'installation suivant l'une des revendications 1 à 10 pour mélanger alternativement une résine de couche de surface comme, par exemple, un système à deux composants pour polyuréthanne et une mousse de PUR.

12. Emploi de l'installation suivant la revendication 11 pour la fabrication de modèles et outils résistant à l'abrasion.

## Claims

1. Device for dosing and mixing of liquid two-component plastics with a dosing pump (17, 18, 19) for each component (A1, A2, B), with a mixing head (2) connected with the dosing pumps (17, 18, 19) by means of pipes (32a, 32b, 32c), with a flushing means (16, 33, 34), and with containers (13, 14, 15, 16) for the components and the flushing liquid, characterized in that at least one container (15) for a first plastic component (B), at least two containers (13, 14) for different second plastic components (A1, A2), the dosing pumps (17, 18, 19) associated therewith and a common controllable drive motor (20) for the dosing pumps are located in a transportable housing (1), that a switching means (55) is provided for selectively connecting the drive (20) with one of at least two dosing pumps (17, 18) at a time for producing the desired two-component plastic together with the first plastic component (B), and that the mixing head (2) is movable connected with the housing (1).

2. Device according to claim 1, characterized in that the switching means encloses at least one mechanically, electrically or hydraulically switchable coupling (55).

3. Device according to claim 2, characterized in that the coupling consists of a double gear coupling (55) shiftable by means of a shift lever (27) and mounted on a a jackshaft (45).

4. Device according to one of the claims 1 to 3, characterized in that the dosing pumps (17, 18, 19) are driven as a gear pump with adjustable speed of rotations.

5. Device according to claims 3 and 4, characterized in that the jackshaft (45) is rotatable by means of a gear motor (40), the speed of rotation of which being stepless adjustable, and that each dosing pump (17, 18, 19) for the components (A1, A2, B) is being driven by this jackshaft (45), preferably by means of a chain drive (50, 53, 54).

6. Device according to claim 5, characterized in that an electromagnetic coupling (47) is placed between the gear motor (40) and the jackshaft (45).

7. Device according to one of the claims 1 to 6, characterized in that the dosing pumps (17, 18, 19) and the drive (20) thereof, as an assembly unit (21), are placed on a bed plate (22).

8. Device according to one of the claims 1 to 7, characterized in that the mixing head (2) is mounted on a level (6) on a rotatable column (5) for movement up- and downwards and being provided with a weight compensation means (7).

9. Device according to claim 8, characterized in that a handle (11) and a switch (30) for actuating the drive (20) of the dosing pumps (17, 18, 19) are placed on the mixing head (2).

10. Device according to claim 8 or 9, characterized in that the column (5) is mounted on a transportable housing (1).

11. Use of the device according to one of the claims 1 to 10, for alternating mixing of a surface-level resin, e.g. of a polyurethane two-component system and a PUR foam material.

12. Use according to claim 11 for producing abrasion resistant models and tools.

Fig. 1

Fig. 2

6

34    36

9

2

32 a,b,c    11

30

33    12

10

13,14    15    16

27

26

29

25

5

13    14    28    23    24

31

1

17, 18, 19

22

4

21    20

0 017 968

Fig. 3